# EUROPEAN PATENT APPLICATION

(11) **EP 3 226 209 A1**
(43) Date of publication of application: **04.10.2017**
(21) Application number: 15864029.2
(22) Date of filing: 16.07.2015
(51) Int. Cl.: G06T 13/40, G02C 7/04

(54) **CONTACT LENS VIRTUAL FITTING METHOD AND DEVICE, AND COMPUTER PROGRAM FOR EXECUTING CONTACT LENS VIRTUAL FITTING METHOD**

(30) Priority: 28.11.2014 KR 20140168501
(71) Applicant: Viewmtechnology Co., Ltd., Gunpo-si Gyeonggi-do 15809 (KR)
(72) Inventor: KIM, Ki Gon, Seoul 158-050 (KR); LEE, Kwang Kyu, Seoul 136-825 (KR); KIM, Il Han, Seoul 136-788 (KR); JEON, Yong Seon, Seoul 150-030 (KR)
(74) Representative: dompatent von Kreisler Selting Werner - Partnerschaft von Patent- und Rechtsanwälten mbB
(86) International application number: PCT/KR2015/007397
(87) International publication number: WO 2016/085085

(57) **Abstract**

The present invention relates to a contact lens virtual fitting method and device, and a computer program for executing the method, the method comprising the steps of: capturing an image of a contact lens, which is loaded on a contact lens holder, through a second optical lens in a structure forming a darkroom; identifying a contact lens region from the captured image of the contact lens; granting a degree of transparency to pixels corresponding to the contact lens region on the basis of the color of the contact lens holder or the color of a contact lens case; synthesizing the contact lens image, generated through the second optical lens, with a pupil of an identified eye region according to the degree of transparency granted to the contact lens image; and displaying the synthesized image.

## Description

### TECHNICAL FIELD

The present invention relates to a contact lens virtual fitting method and device, and a computer program for executing the method, and specifically, to a contact lens virtual fitting method and device, and a computer program for executing the method, which can show a view of wearing contact lenses by synthesizing images of the contact lenses and a face photographed directly without wearing the contact lenses through recognition of the shapes of the contact lenses and eyes.

### BACKGROUND ART

Contact lenses are widely used. The contact lenses are widely utilized for aesthetic purpose, as well as correction of vision. It is known that there are circle lenses, color lenses and the like as the lenses for beauty. The circle lenses or the color lenses have a color in the edge of the lenses or in the lenses. The circle lenses or the color lenses are widely used among teenagers or people in their twenties who are sensitive to appearance, although the lenses are not for vision correction.

All contact lenses- including cosmetic lenses do not guarantee safety and have a high risk of side effects without advice of an ophthalmologist. Particularly, teenagers should pay more attention since eyeballs are growing and degradation of vision may occur due to the side effects of the lenses.

In purchasing the contact lenses, a purchaser needs to select lenses matching to him or to her. Generally, the shape of contact lenses should be confirmed using a magnifier or eyes to select contact lenses. Although the purchaser is allowed to wear contact lenses as part of service, it is troublesome in that the user should keep hands clean for hygiene purpose to contact with the contact lenses, put a lens on the tip of a finger, and wear the contact lens at the center of an eye by opening the eye while seeing a mirror. After the contact lenses are worn once, they cannot be reused for reasons of hygiene or the like.

Like this, it is not easy for the purchaser to select contact lenses matching to him or to her in purchasing the contact lenses.

Meanwhile, an app program of a specific app store provides a function for removing such an inconvenience. A corresponding app may combine a previously prepared lens image with a face image of a user in software to let the user know his or her style (appearance) after wearing contact lenses according to the combination.

The app program may synthesize a face only for a previously tuned lens image, and furthermore,- quality of the lens image is low, a real lens image is different from a tuned lens image in many cases, and addition of a lens image is not easy.

A contact lens virtual fitting method and a device and a computer program for executing the method are needed to show a view of wearing contact lenses without wearing the contact lenses by photographing images of the contact lenses dynamically and synthesizing the contact lens images with a face image obtained through face recognition.

### DISCLOSURE OF INVENTION

### TECHNICAL PROBLEM

The present invention has been conceived to solve the problems described above, and an object of the present invention is to provide a contact lens virtual fitting method and device, and a computer program for executing the method, which can show a view of virtually wearing certain contact lenses by photographing an image of the contact lenses, photographing an image of a face, and dynamically synthesizing the two images.

In addition, another object of the present invention is to provide a contact lens virtual fitting method and device, and a computer program for executing the method, which can provide a natural view of wearing contact lenses by fitting the size of the contact lenses to eye regions recognized from a face image and granting a degree of transparency to a contact lens image according to the image of the contact lens and the shape of the eye regions.

In addition, still another object of the present invention is to provide a contact lens virtual fitting method and device, and a computer program for executing the method, which can prevent eye disease problems generated when a user directly wears the contact lenses and reduce the cost arising from waste of the contact lenses.

The problems to be solved in the present invention are not limited to the problems mentioned above, and unmentioned other problems may be clearly understood by those skilled in the art from the following description.

### TECHNICAL SOLUTION

A contact lens virtual fitting method for accomplishing the objects described above includes the steps of: capturing an image of a contact lens mounted on a contact lens holder through a second optical lens in a case forming a darkroom; identifying a contact lens region from the captured image of the contact lens; granting a degree of transparency to corresponding pixels of the contact lens region on the basis of a color of the contact lens holder or a color of a contact lens case; synthesizing the contact lens image created through the second optical lens with a pupil of an identified eye region according to the degree of transparency granted to the contact lens image; and displaying the synthesized image.

In addition, the contact lens virtual fitting method further includes, before the synthesis step, the steps of: capturing a face image through a first optical lens; and identifying an eye region from the captured face image, wherein the step of capturing an image of a contact lens is accomplished while light is output from a plurality of LED illuminations provided in the darkroom and the light is diffused through a diffusion plate provided in the darkroom so that uniform illuminance may be provided in the darkroom.

In addition, the step of identifying a contact lens region of the contact lens virtual fitting method includes the steps of: identifying one or more contours from the captured image; identifying circles according to a deviation of points on each of the one or more contours; determining a largest circle among the identified circles as a circle corresponding to a shape of the contact lens; and creating a contact lens image including the determined circle, wherein the step of granting a degree of transparency includes the steps of granting a degree of transparency according to colors of pixels in the circle determined to correspond to the contact lens, and granting a degree of transparency larger than a predetermined threshold value to pixels outside the circle.

In addition, the step of identifying an eye region of the contact lens virtual fitting method includes the step of determining a plurality of points positioned on a border line between the pupil and skin adjacent to the pupil.

In addition, the synthesis step of the contact lens virtual fitting method includes the steps of: determining a circle corresponding to the pupil using the plurality of points; reducing the created contact lens image using a size of the circle determined by the plurality of points; and further granting a degree of transparency to pixels of a region identified in the reduced contact lens image using a first circle determined by first points and a second circle determined by second points among the plurality of points.

In addition, the pixels of the identified region of the contact lens virtual fitting method are set to be transparent, and the synthesis step includes the step of, after the step of granting a degree of transparency of the identified region, aligning a center of a circle of the reduced contact lens with a center corresponding to the pupil and synthesizing by overlapping each pixels after aligning.

In addition, a computer program for accomplishing the objects described above executes each of the steps of a contact lens virtual fitting method, and the contact lens virtual fitting method includes the steps of: capturing an image of a contact lens mounted on a contact lens holder through a second optical lens mounted on a case forming a darkroom; identifying a contact lens region from the captured image of the contact lens; granting a degree of transparency to corresponding pixels of the contact lens region on the basis of a color of the contact lens holder or a color of a contact lens case; synthesizing the contact lens image created through the second optical lens with a pupil of an identified eye region according to the degree of transparency granted to the contact lens image; and displaying the synthesized image.

In addition, a contact lens virtual fitting device for accomplishing the objects described above includes: a first camera unit including a first optical lens to capture a face image; a second camera unit including a second optical lens and a contact lens holder and configured in a case forming a darkroom to capture an image of a contact lens mounted on the contact lens holder through the second optical lens; a control unit for identifying a contact lens region from the captured image of the contact lens, granting a degree of transparency to corresponding pixels of the contact lens region on the basis of a color of the contact lens holder or a color of a contact lens case, identifying an eye region from the captured face image, and synthesizing the contact lens image created through the second optical lens with a pupil of the identified eye region according to the degree of transparency granted to the contact lens image; and a display unit for displaying the synthesized image.

In addition, the second camera unit of the contact lens virtual fitting device further includes a plurality of LED illuminations for outputting light and a diffusion plate for diffusing the light, and the control unit captures an image of the contact lens through the second optical lens in an illuminance environment of light using the plurality of LED illuminations and the diffusion plate.

In addition, for identification of the contact lens region, the control unit of the contact lens virtual fitting device identifies one or more contours from the captured contact lens image, identifies circles according to a deviation of points on each of the one or more contours, determines a largest circle among the identified circles as a circle corresponding to a shape of the contact lens, and creates a contact lens image including the determined circle, and for grant of the degree of transparent, the control unit grants a degree of transparency according to colors of pixels in the circle determined to correspond to the contact lens, and grants a degree of transparency larger than a predetermined threshold value to pixels outside the circle.

In addition, for identification of the eye region, the control unit of the contact lens virtual fitting device determines a plurality of points positioned on a border line between the pupil and skin adjacent to the pupil, and for image synthesis, the control unit determines a circle corresponding to the pupil using the plurality of points, reduces the created contact lens image using a size of the circle determined by the plurality of points, and grants a degree of transparency to pixels of a region identified in the reduced contact lens image using a first circle determined by first points and a second circle determined by second points among the plurality of points.

In addition, the contact lens virtual fitting device further includes: a storage unit for storing the contact lens image and a contact lens identifier corresponding to the contact lens image; and an input unit for receiving the contact lens identifier, wherein the control unit searches for a contact lens image stored in the storage unit using the contact lens identifier received through the input unit and synthesizes a contact lens region of the contact lens image searched from the storage unit for image synthesis with the pupil of the eye region.

### ADVANTAGEOUS EFFECTS

The contact lens virtual fitting method and device, and a computer program for executing the method according to the present invention as described above has an effect of showing a view of virtually wearing certain contact lenses by photographing an image of the contact lenses, photographing an image of a face, and dynamically synthesizing the two images.

In addition, the contact lens virtual fitting method and device, and a computer program for executing the method according to the present invention as described above has an effect of providing a natural view of wearing contact lenses by fitting the size of the contact lenses to eye regions recognized from a face image and granting a degree of transparency to a contact lens image according to the image of the contact lens and the shape of the eye regions.

In addition, the contact lens virtual fitting method and device, and a computer program for executing the method according to the present invention as described above has an effect of preventing eye disease problems generating when a user directly wears the contact lenses and reducing the cost arising from waste of the contact lenses.

The effects that can be obtained from the present invention are not limited to the effects mentioned above, and unmentioned other effects will be clearly understood by those skilled in the art from the following description.

### BRIEF DESCRIPTION OF THE DRAWINGS

FIG. 1 is a view showing an exemplary block diagram of a contact lens virtual fitting device.
FIG. 2 is a view showing an exemplary schematic contact lens virtual fitting flow.
FIG. 3 is a flowchart illustrating a specific flow of a contact lens recognition step.
FIG. 4 is a flowchart illustrating a specific flow of an eye recognition step.
FIG. 5 is a flowchart illustrating a specific flow of a synthesis step.
FIG. 6 is a view of showing captured images of a contact lens.
FIG. 7 is a view showing eye region portions in a face image showing eye regions.
FIG. 8 is a view showing circles determined in the step of synthesizing a contact lens image and a face image.
FIG. 9 is a view showing an example of identifying a region for granting an additional degree of transparency using the determined circles.
FIG. 10 is a view showing an example of the structure of a second camera unit.

**DESCRIPTION OF SYMBOLS**

| | |
|---|---|
| 100: Contact lens virtual fitting device | |
| 101: Input unit | 103: Output unit |
| 105: Communication unit | 107: Storage unit |
| 109: First camera unit | 111: Second camera unit |
| 111-1: LED illumination | 111-2: Diffusion plate |
| 111-3: Contact lens holder | 111-4: Optical lens |
| 111-5: Contact lens | |
| 113: Display unit | 115: connection unit |
| 117: Control unit | |

### MODE FOR CARRYING OUT THE INVENTION

The objects, features and advantages described above will be further clarified through the detailed description described below with reference to the accompanying drawings, and accordingly, those skilled in the art may easily embody the spirits of the present invention. Further, in the following description of the present invention, if detailed description of known techniques related to the present invention is determined to unnecessarily obscure the subject matter of the present invention, the detailed description thereof will be omitted.

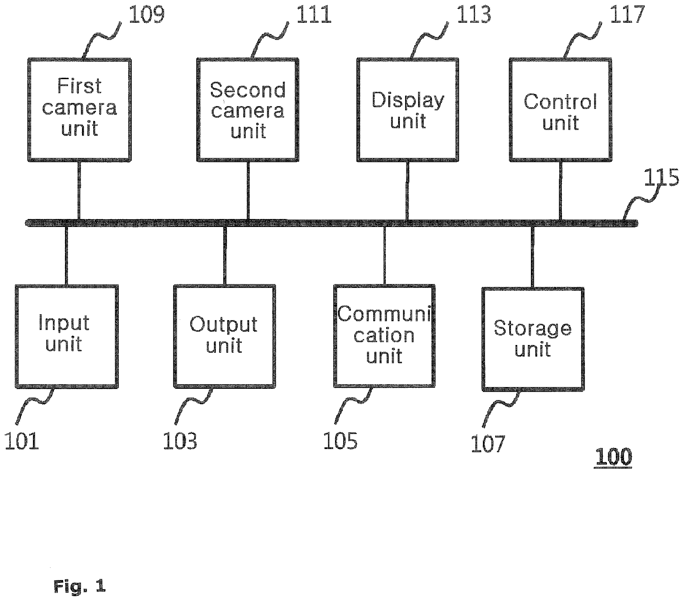

FIG. 1 is a view showing an exemplary block diagram of a contact lens virtual fitting device 100.

According to FIG. 1, a contact lens virtual fitting device 100 includes an input unit 101, an output unit 103, a communication unit 105, a storage unit 107, a first camera unit 109, a second camera unit 111, a display unit 113, a connection unit 115 and a control unit 117. The contact lens virtual fitting device 100 may further include other specific blocks according to addition of functions. Or, specific blocks of FIG. 1 may be omitted. The blocks of FIG. 1 preferably show a functional block diagram.

The contact lens virtual fitting device 100 may be configured in a case or configured to be distributed in a plurality of cases. For example, the display unit 113 may be configured as a display device, and the second camera unit 111 may be configured in a separate case having a darkroom, and the other blocks may be configured as a personal computer or a dedicated product. Alternatively, all the blocks may be configured as a dedicated product. Like this, a product configuring the contact lens virtual fitting device 100 may be configured as one or a plurality of products.

Briefly describing each of the blocks of the contact lens virtual fitting device 100, the input unit 101 receives a user input. The input unit 101 is provided with one or more input means such as a mouse, buttons, a touch pad, a touch panel, a keypad, a keyboard, a microphone, an optical pen and the like. Through the input unit 101, a manager or a user of the contact lens virtual fitting device 100 may call or terminate a function provided by the contact lens virtual fitting device 100 or confirm a result according to performing the function. For example, the input unit 101 receives a user input requesting synthesis of a face image with a contact lens image and transfers the user input to the control unit 117.

The output unit 103 outputs a result processed in response to a user input or according to performing a specific function in the contact lens virtual fitting device 100. The output unit 103 is provided with one or more output means such as a printer interface, a speaker, an LED and the like.

The communication unit 105 is connected to a network and transmits and receives data. The communication unit 105 includes a communication chipset for being connected to, for example, a local area communication network and may transmit data received from the control unit 117 as network packets and transfer data of network packets received from the network to the control unit 117. The local area communication network may be, for example, a wired LAN, a wireless LAN, Bluetooth, ZigBee or the like.

Through the communication unit 105, the contact lens virtual fitting device 100 may transmit various kinds of images, data and/or programs stored in the storage unit 107 to a device of a remote site and receive images, data, programs and the like from a device of a remote site. The device of a remote site may be a server connectible through an Internet network or a portable terminal connectible through a mobile communication network. The portable terminal may be, for example, a smart phone, a tablet PC or the like.

The storage unit 107 permanently and/or temporarily stores various kinds of data and programs. The storage unit 107 includes volatile memory, non-volatile memory and/or large-volume storage media such as hard disk. The storage unit 107 comprises various kinds of programs used by the contact lens virtual fitting device 100, captured face images, captured contact lens images and face images synthesized with the contact lens images.

Each of the images is stored together with an identifier. For example, face images are stored together with an identifier of a general user who has purchased or has an intention of purchasing the contact lenses 111-5. The identifier of a general user is configured of a combination of one or more of, for example, a name, a phone number, an address, a unique serial number (e.g., a number assigned by a manager of the contact lens virtual fitting device 100) and the like. The contact lens images are stored together with an identifier of a corresponding contact lens 111-5, and the identifier of the contact lens 111-5 is configured of a combination of one or more of a manufacturer, a model name, a model number and the like. The synthesized face images are stored together with an identifier of a general user and an identifier of the contact lens 111-5. Accordingly, a user may confirm synthesized images which look like wearing various contact lenses 111-5.

A synthesis program is also stored in the storage unit 107. The synthesis program may capture images and store the captured images in the storage unit 107. In addition, the synthesis program may synthesize images and display or store the synthesized images. Preferably, the synthesis program is configured to synthesize a contact lens image with an eye region, specifically, a pupil region, of a face image. A degree of transparency is granted to a contact lens image for creation of a natural image, and the contact lens image is synthesized to a face image according to the degree of transparency.

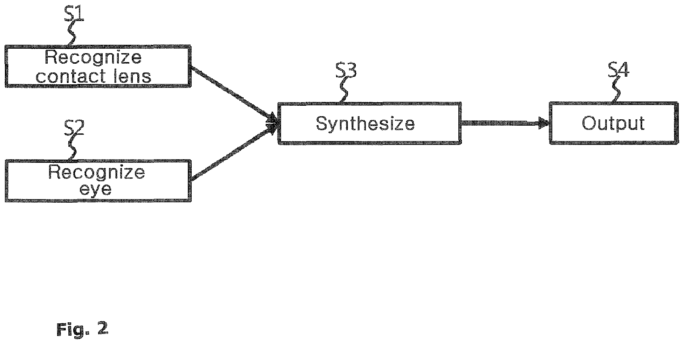

The synthesis program is configured to be executed in combination with hardware derived from FIG. 1 and may be stored and distributed in a medium. The medium may be, for example, an online medium or an offline medium. The online medium may be, for example, a server or the like distributing an app or the like, and the offline medium may be, for example, a USB memory, a memory card, a hard disk, a CD, a DVD or the like. Capturing and synthesizing specific images accomplished by the synthesis program will be described with reference to FIG. 2 and the followings.

The first camera unit 109 includes an optical lens and an image sensor. The first camera unit 109 captures an image including a face of a general user under the control of the control unit 117. The first camera unit 109 outputs the captured face image to the control unit 117 as an analog or digital signal.

The second camera unit 111 includes an optical lens 111-4 and an image sensor. The second camera unit 111 captures an image of a contact lens 111-5 under the control of the control unit 117. The second camera unit 111 preferably further includes an illumination 111-1 (e.g., an LED illumination 111-1) and a contact lens holder 111-3 for fixing the contact lens 111-5 and designated as a photographing region of the optical lens 111-4. At least the illumination and the contact lens holder 111-3 are installed in a case configuring the second camera unit 111, and the case provides at least a darkroom function. The contact lens holder 111-3, particularly, a specific region for positioning the contact lens 111-5, is displayed in a specific color. That is, a specific region of the contact lens holder 111-3 for positioning the contact lens 111-5 is recognized as one same color when an image is captured.

For example, a specific region may be captured in white color. This color may be recognized as a background color thereafter, and a degree of transparency may be granted to the contact lens image through recognition of the background color. The contact lens holder 111-3 is painted or applied with an ink or a paint designated as a background color. The background color is not limited to the white color and may be another color. For example, it can be red R, green G, blue B or the like. The background color may be selected on the basis of a color of a pattern of a specific contact lens 111-5 and preferably selected by a manager. For example, if the pattern of the contact lens 111-5 is blue, a color other than blue is selected as a background color. In the following description, the background color is assumed to be white for simple understanding of the description, and other colors will be mentioned only when it is needed in the description.

The contact lens holder 111-3 is exposed to the outside of the darkroom in a sliding manner in association with a specific button of the input unit 101 and inserted inside the darkroom in a sliding manner according to input of the same button.

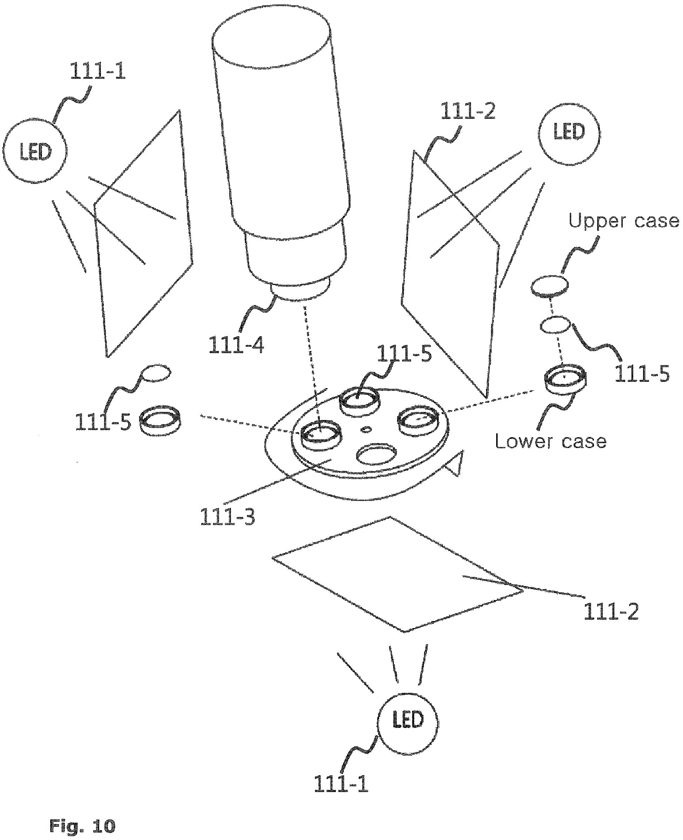

FIG. 10 is a view showing an example of the structure of a second camera unit 111.

As is understood from FIG. 10, the second camera unit 111 includes one or more LED illuminations 111-1, one or more diffusion plates 111-2, a contact lens holder 111-3 and an optical lens 111-4. In addition, the second camera unit may further include one or more contact lenses 111-5 mounted on the contact lens holder 111-3.

Describing the second camera unit 111 in more detail with reference to FIG. 10, the contact lens holder 111-3 is configured to mount one or more contact lenses 111-5. The region of a position for mounting a contact lens 111-5 is applied with an ink, a paint or the like in a specific background color. The contact lens holder 111-3 can be configured to rotate, and the optical lens 111-4 is configured to photograph a specific contact lens 111-5 selected by rotation. The contact lens holder 111-3 may be exposed to the outside in a sliding manner. If the contact lens holder 111-3 can mount a plurality of contact lenses 111-5, the color of a region of a contact lens holder 111-3 on which a contact lens 111-5 is mounted may be different from those of the other regions of the other contact lens holders. For example, one region is configured in white color, another region in blue color, another region in green color, and another region in red color.

The second camera unit 111 of FIG. 10 forms a darkroom and includes a plurality of LED illuminations 111-1 for providing light in the darkroom. The LED illuminations 111-1 are configured to output predetermined illuminance. The LED illuminations 111-1 output, for example, white light of multiple level illuminance, and control of the illuminance level is performed by the control unit 117. The illuminance may be controlled differently according to the color of a specific contact lens 111-5. The light output through the LED illuminations 111-1 is diffused by the diffusion plate 111-2, and uniform illuminance may be provided in the darkroom by the LED illuminations 111-1 provided from various angles.

The contact lens 111-5 is mounted on the contact lens holder 111-3. Preferably, the contact lens 111-5 is mounted in a contact lens case, and the contact lens case is mounted on the contact lens holder 111-3. The contact lens case is configured of a lower case for accommodating the contact lens 111-5 inside thereof or configured to further include an upper case. The lower case is configured transparently or painted in a background color. If the lower case is applied with an ink or a paint of a background color, configuration of the background color of the contact lens holder 111-3 may be omitted. The upper case is configured to be transparent.

The contact lens case may not include the upper case, and in this case, the manager may mount the contact lens 111-5 on the contact lens case using a pair of tweezers or the like and may replace the contact lens 111-5 if needed. When the contact lens case includes the upper case, the contact lens case itself containing the contact lens 111-5 may be mounted or replaced at the contact lens holder 111-3.

The display unit 113 displays an image created by the control unit 117. The display unit 113 may be an LCD or LED display device. This display may be a computer monitor, a dedicated monitor or a general TV manufactured and distributed by a manufacturer. The display unit 113 displays an image output by the control unit 117 and, for example, displays an image created by synthesizing a face image with a contact lens image.

The connection unit 115 transmits and receives data between the blocks. The connection unit 115 includes a parallel bus or a serial bus. In addition, the connection unit 115 further includes a dedicated bus according to the interface type of a specific block. For example, data transmitted from the first camera unit 109 and the second camera unit 111 to the control unit 117 is transmitted through a bus provided by a chipset of the image sensor or a bus provided by the control unit 117 to receive an image. Data transmitted from the control unit 117 to the display unit 113 is transmitted through a bus provided by the display unit 113 or a bus provided by the control unit 117 to output the image.

The control unit 117 controls the blocks of FIG. 1. The control unit 117 includes execution units referred to as a CPU, an MPU, a processor or the like, loads programs stored in the storage unit 107 onto internal memory or registers, and controls other blocks. For example, the control unit 117 loads a synthesis program stored in the storage unit 107 and controls the input unit 101, the display unit 113, the storage unit 107, the first camera unit 109, the second camera unit 111 and the like by executing the synthesis program.

The control unit 117 captures images by controlling the first camera unit 109 and/or the second camera unit 111 and stores the captured images in the storage unit 107. The control unit 117 synthesizes a captured contact lens image with a captured face image and outputs the synthesized image through the display unit 113. In addition, the control unit 117 may store the captured images and/or the synthesized face image in the storage unit 107 and transmit the images to a device at a remote site through the communication unit 105 if needed.

Specific flow of control performed by the control unit 117 is described below with reference to FIG. 2 and the followings.

FIG. 2 is a view showing an exemplary schematic contact lens virtual fitting flow.

The schematic flow of FIG. 2 is configured of a contact lens recognition step S1, an eye recognition step S2, a synthesis step S3 and an output step S4. The schematic flow of FIG. 2 is performed by the contact lens virtual fitting device 100 and is preferably accomplished by loading a synthesis program stored in the storage unit 107, executing the synthesis program and controlling other blocks according to the synthesis program by the control unit 107.

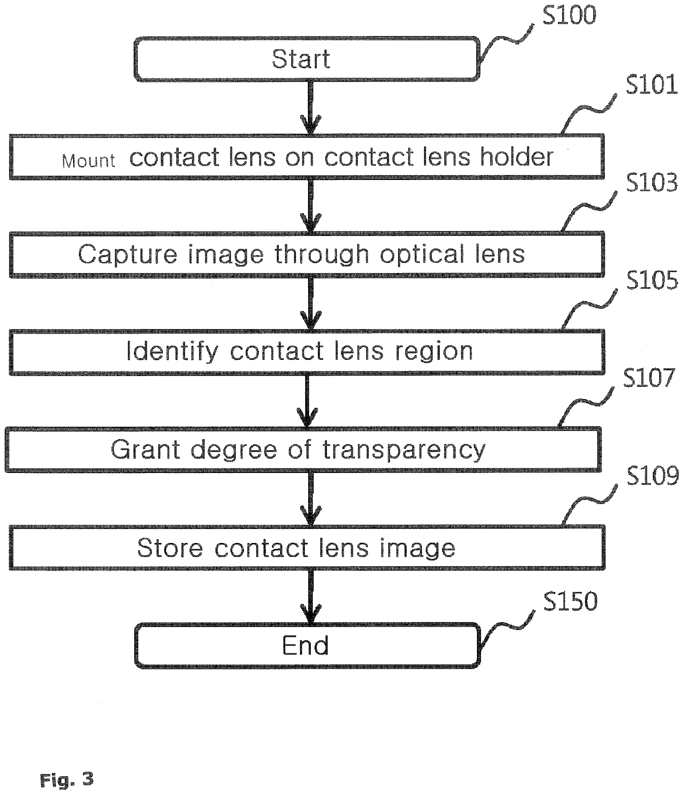

Describing each of the steps briefly, the contact lens recognition step S1 is a step of photographing an image of the contact lens holder 111-3 using the optical lens 111-4, (or) recognizing the shape of the contact lens 111-5 from the image captured through the photographing, and then processing the captured image according to recognition of the contact lens 111-5. An image of the contact lens 111-5 may be extracted or created from the image photographed through the contact lens recognition step, and then a degree of transparency may be granted to each pixel of the contact lens image. The contact lens recognition step will be described in detail with reference to FIG. 3.

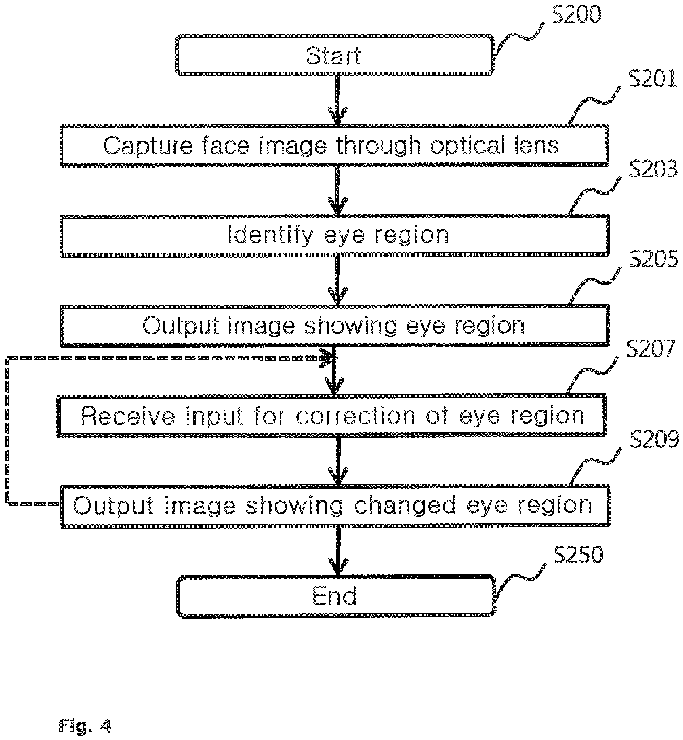

The eye recognition step S2 is a step of photographing a face of a general user using the optical lens (or) and recognizing an eye region of the face from a face image captured through the photographing. The eye recognition step S2 is particularly configured to recognize a pupil region of the eye region. The pupil region becomes a region for synthesizing a contact lens image thereafter. The eye recognition step S2 will be described in detail with reference to FIG. 4.

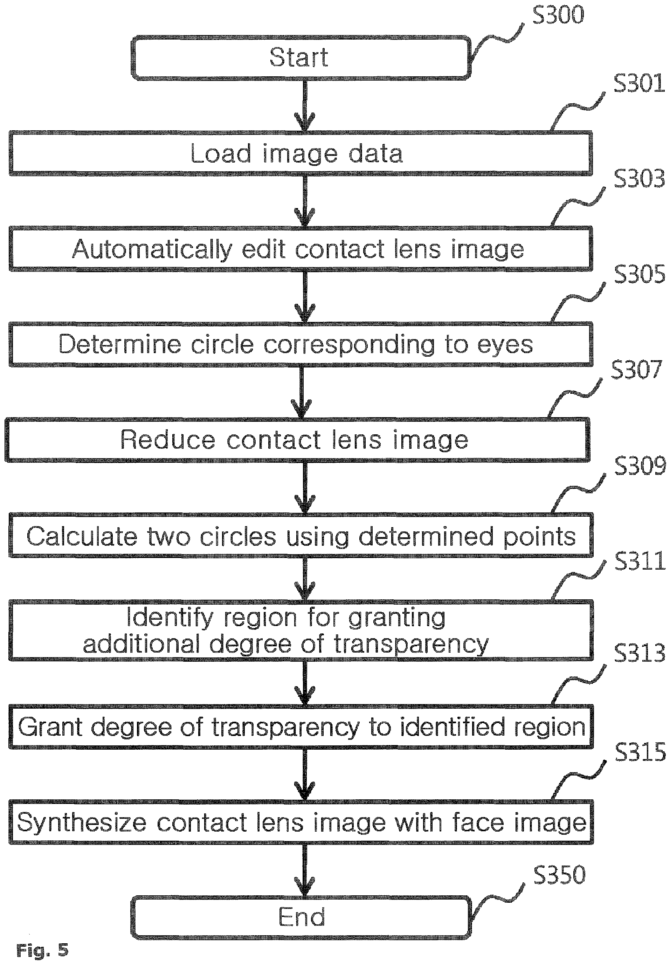

The synthesis step S3 is a step of synthesizing a contact lens image with a face image. The synthesis step particularly synthesizes a pupil region of the face image with the contact lens image to which a degree of transparency is granted in advance according to the degree of transparency. In addition, the synthesis step S3 may progress the synthesis by adjusting the size of the contact lens image in consideration of various shapes of the pupil and further granting a new degree of transparency to the contact lens image. The synthesis step S3 will be described in detail with reference to FIG. 5.

The output step S4 outputs a synthesized image. The output step S4 outputs a synthesized image through the display unit 113 or outputs the synthesized image through the communication unit 105.

The steps of FIG. 2 do not need to be executed sequentially. For example, a precedence relation does not need to exist between the contact lens recognition step S1 and the eye recognition step S2. The eye recognition step S2 may be performed after the contact lens recognition step S1, and vice versa.

In addition, a specific step may be performed at a different time point. For example, the contact lens recognition step S1 is performed first by a manager for each model of the contact lens 111-5, and a contact lens image and a corresponding contact lens identifier are stored in the storage unit 107 in advance. Then, the control unit 117 receives a contact lens identifier by the manager through the input unit 101 in response to a request of a general user and searches for a contact lens image and a data stored in the storage unit 107 using the received identifier. The control unit 117 may synthesize the contact lens region of the searched contact lens image with the pupil of an identified eye region of a face image captured through photographing (step S3) and output a synthesized image (step S4).

FIG. 3 is a flowchart illustrating a specific flow of a contact lens recognition step (step S1).

The contact lens recognition step of FIG. 3 is performed by the blocks of FIG. 1 and is preferably accomplished by the control unit 117 by controlling the other blocks using a synthesis program.

This flow begins when a manager of the contact lens virtual fitting device 100 requests recognition of a contact lens 111-5 through the input unit 101 (step S100) and ends when performance of the flow is completed or a termination request is received through the input unit 101 (step S150).

The manager mounts a contact lens, virtual fitting of which is requested by a user, on the contact lens holder 111-3 (step S101) and positions the contact lens holder 111-3 in the darkroom in a sliding manner. The contact lens 111-5 is preferably contained in a contact lens case to be mounted on the contact lens holder 111-3.

If the manager presses a shooting button through the input unit 101, the control unit 117 creates a control signal for controlling the second camera unit 111 according to the shooting button and outputs the control signal to the second camera unit 111. The second camera unit 111 controls the LED illumination 111-1 and outputs light as the control signal is received, photographs an image including the contact lens 111-5 mounted on the contact lens holder 111-3 through the optical lens 111-4, and captures an image exposed to the image sensor as the image is photographed (step S103). The captured image is transmitted to the control unit 117 by the second camera unit 111.

The captured image is configured of a predetermined number of pixels in the horizontal (X-axis) direction and the vertical (Y-axis) direction according to the resolution of the second camera unit 111 and includes an image showing the shape of the contact lens 111-5. The pixels are preferably expressed in colors, for example, expressed in RGB pixel values, in YCbCr pixels values or in a format for expressing the colors.

The control unit 117 identifies a contact lens region expressing a contact lens shape from the captured image (step S105). Identification of the contact lens region is accomplished through identification of contours. Identification of the contours may be accomplished by using an algorithm generally known in the image processing field. The contours are expressed by the points representing edges.

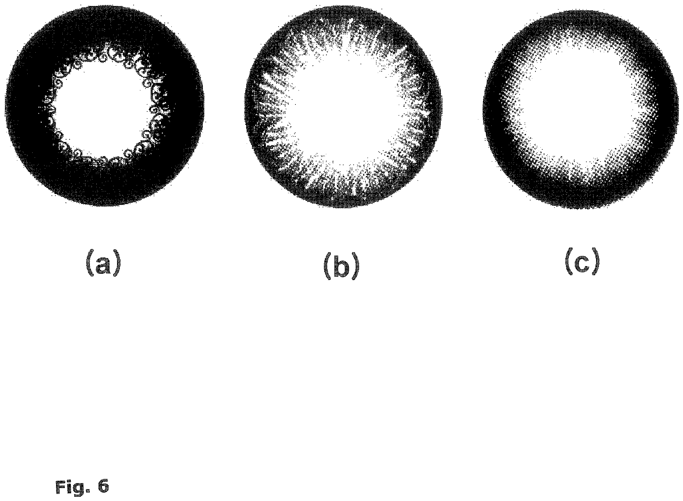

FIG. 6 shows captured images of a contact lens 111-5. The contact lens 111-5 of FIG. 6 is a color lens or a circle lens. As is understood from FIG. 6, the captured images of the contact lens 111-5 have several contours, and it is understood that the outermost circular contour shows the shape of the contact lens 111-5 and the other contours show patterns or the like of the inside of the contact lens 111-5.

Describing identification of a contact lens region in detail, the control unit 117 identifies contours of a captured image. Since there is a plurality of patterns in a contact lens 111-5, there is a plurality of contours. The control unit 117 sorts the identified contours in descending order of the number of points included in a contour and excludes contours having points smaller than a predetermined number from target contours for identifying a contact lens region. The control unit 117 finds (searches for) a minimum point and a maximum point on the X-axis (in the horizontal direction of the image) and a minimum point and a maximum point on the Y-axis (in the vertical direction of the image) of each sorted contour.

The control unit 117 identifies whether each contour is a circle using the four points of each contour. Since a contact lens shape is generally a circle, the distance from the center point of the circle to a point on the edge (rim) should be constant. To identify a circle, the control unit 117 calculates the center point of four points using the found four points and calculates a standard deviation of the distance between the center point and each of the points. If the standard deviation is smaller than a predetermined threshold value, the control unit 117 may identify that the corresponding contour is a circle. The predetermined threshold value may be determined in advance and may be, for example, a value of thirty, twenty or the like.

As a circle is identified, the control unit 117 may identify a plurality of circles corresponding to a plurality of contours. The control unit 117 may determine the largest circle among the plurality of identified circles as a circle representing the shape of the contact lens. The control unit 117 sets the center point of a contour corresponding to the largest circle as the center of the identified contact lens 111-5 and sets the largest distance among the distances between the center point of the corresponding contour to the points on the contour as the radius of the identified contact lens 111-5.

In addition, in the step of identifying a contact lens region, the control unit 117 creates a contact lens image including a circle expressing the shape of the contact lens from the captured image. The created contact lens image is, for example, an image cut off in the shape of a square or a rectangle including the circle of the contact lens shape.

After the step of identifying a contact lens region (step S105), the control unit 107 grants a degree of transparency to the created contact lens image at step S107. Granting a degree of transparency to the contact lens image is accomplished on the basis of the color of each pixel (specifically a background color) of the contact lens image.

Specifically, the control unit 117 searches for a background color from the pixels of the contact lens image and grants a degree of transparency so that pixels corresponding to the background color (pixels inside the circle of the contact lens shape) may not be seen (transparent). For example, the background color may be the same as the color of the contact lens holder 111-3 or the color of the lower case of the contact lens case and may be, for example, white color. Since the white color generally has 8-bit RGB values of 255, 255 and 255, in the case of pixel values that can be recognized as white color (e.g., each of the RGB values is 245 or larger), the control unit 117 grants a degree of transparency to make the pixel transparent.

In addition, the control unit 117 grants a degree of transparency higher than a predetermined threshold value (e.g., a degree of transparency of 100%) to make all the pixels external to the circle (a circle determined by a radius and a center) of the contact lens shape transparent. In addition, the control unit 117 may grant an additional degree of transparency to the pixels inside the contact lens shape. For example, the control unit 117 may change colors of the pixels inside the contact lens shape to a color value of greyscale and grant a degree of transparency proportional to the color value of greyscale to each pixel. For example, the control unit 117 grants a degree of transparency of 0% (opaque) if the color value of greyscale is zero (black) and grants a degree of transparency of 30% if the color value of greyscale is thirty (e.g., a greyscale value of yellow or blue).

After granting the degree of transparency, the control unit 117 stores the contact lens image, to which a degree of transparency is granted, in the storage unit 107 (step S109). The control unit 117 may temporarily store the contact lens image in volatile memory or permanently store the contact lens image in non-volatile memory or a large-volume storage medium. The contact lens image is stored together with data including the center and the radius of the contact lens 111-5. In addition, the contact lens image may be stored together with a contact lens identifier. The contact lens identifier is input through the input unit 101 by the manager and stored together with a corresponding contact lens image by the control unit 117.

A contact lens image can be extracted through the contact lens recognition step of FIG. 3, and a degree of transparency is granted to the extracted image so that a natural synthesized image can be provided in the synthesis thereafter.

FIG. 4 is a flowchart illustrating a specific flow of an eye recognition step.

The eye recognition step of FIG. 4 is performed by the blocks of FIG. 1 and is preferably accomplished by the control unit 117 by controlling the other blocks using a synthesis program.

First, in response to a request of a user for virtually fitting a contact lens, the manager transfers the request to the control unit 117 via the input unit 101 by pressing a shooting button for photographing a face image (step S200). The shooting button used herein may be the same as or different from the shooting button of FIG. 3. The control unit 117 creates a control signal for controlling the first camera unit 109 and outputs the control signal to the first camera unit 109.

As the control signal is received, the first camera unit 109 photographs the face of the user through the optical lens and captures an image of the face exposed to the image sensor according to the photographing (step S201). The captured face image is transmitted to the control unit 117 by the first camera unit 109. The captured face image is configured of a predetermined number of pixels in the horizontal (X-axis) direction and the vertical (Y-axis) direction according to the resolution of the first camera unit 109. The pixels are preferably expressed in colors, for example, expressed in RGB pixel values, in YCbCr pixels values or in a format for expressing the colors.

As the captured face image is received, the control unit 117 identifies an eye region from the captured image (step S203). Identification of the eye region is accomplished by using a generally known algorithm. For example, the synthesis program of the control unit 117 identifies an eye region using a cascaded classifier for detecting a face and an eye using a feature vector (e.g., a Haar feature, an LBP feature).

While identifying the eye region, the control unit 117 also identifies a pupil region. Preferably, the control unit 117 identifies a contour of a pupil for identification of the pupil region. Identification of a contour of a pupil may be accomplished by using an algorithm generally known in the image processing field.

As a contour is identified, the control unit 117 determines the points existing on the border line between the pupil and adjacent skin (e.g., an eyelid, the skin under the pupil (lower eyelid)), which will be used in synthesis, among the points included in this contour or the points existing inside the contour.

For example, the control unit 117 selects three points from the border line between the upper eyelid and the pupil and three points from the border line between the pupil and the lower eyelid. Both end points and the center point of a border line, where the upper eyelid (or the lower eyebrow) meets the pupil, are selected as the three points. If a border line does not exist between the pupil and the skin, the three points are selected accordingly from the rim (border line) of the pupil.

Then, the control unit 117 outputs a face image showing the eye region through the display unit 113.

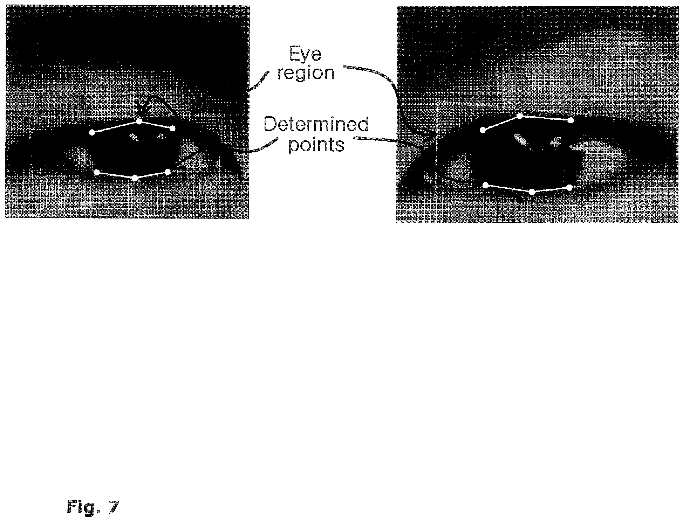

FIG. 7 is a view showing eye region portions in a face image showing eye regions. As is understood from FIG. 7, the face image displayed through the display unit 113 shows rectangles expressing the regions of the left and right eyes and the points shown inside the pupil regions.

The points determined through step S203 are displayed as a dot, and these points can be modified. A manager or a user confirms whether the points exist at correct positions. If it is determined that the points do not exist at correct positions with respect to adjacent skin, the manager or the like provides an input for modifying the positions of the points through the input unit 101 (e.g., a mouse, a touch panel, an optical pen or the like).

The control unit 117 receives the input for modifying the eye region (specifically, modification of the points existing on the border line between the pupil and the adjacent skin) through the input unit 101 (step S207), modifies positions of corresponding points according to the received input, and outputs an image showing the modified eye region (specifically, change of the points existing on the border line between the pupil and the adjacent skin) through the display unit 113 (step S209).

Steps S207 and S209 may be repetitively performed, and therefore, points on the border line of the eye region may be specified correctly.

After step S209, the control unit 117 stores data expressing the determined face image, the position of the eye region on the face image and the points on the border line of the pupil of the eye region in the storage unit 107 and terminates the process (step S250). When the control unit 117 stores the data in the storage unit 107, an identifier of a (general) user may also be stored. Storing the data in the storage unit 107 is storing the data in volatile memory, non-volatile memory or a large-volume storage medium.

FIG. 5 is a flowchart illustrating a specific flow of a synthesis step (step S3).

The synthesis step of FIG. 5 is performed by the blocks of FIG. 1 and is preferably accomplished by the control unit 117 by controlling the other blocks using a synthesis program.

In response to input of a synthesis request from a manager or automatically (step S300), the control unit 117 loads data indicating a contact lens image stored in the storage unit 107 and granted with a degree of transparency, a center and a radius of a contact lens 111-5, a face image, a position of an eye region and points on a border line onto volatile memory, internal memory of the control unit 117 or the like (step S301).

The control unit 117 automatically edits the contact lens image in accordance to the pupil region of the face image using the points on the border line (step S303). The automatic editing herein may be omitted as needed or according to change of design.

Then, the control unit 117 determines a circle corresponding to the pupil by calculating a center and a radius of the circle representing the pupil by using the points on the border line of the face image (step S305). Determination of a circle corresponding to the pupil is accomplished with respect to the face image. Specifically, the control unit 117 calculates the center and the radius of the circle using the points on the sides (for example, three points), not the middle points, among the points on the border line. The center of the circle corresponding to the pupil may be calculated using the normal of each points, and the radius is calculated as a distance to each point from the center. Hereinafter, the circle corresponding to the pupil is also referred to as C0.

The control unit 117 reduces the contact lens image (specifically, the circle of the contact lens shape) to a size of the circle corresponding to the pupil determined at step S305 using the points on the border line (step S307). Accordingly, the size of the contact lens image is readjusted at least to be the same as the size of the pupil. Although the size of the contact lens image is reduced since the resolution of the contact lens image is generally higher than the resolution of the pupil included in the face image, step S307 may be omitted as needed.

The size of the contact lens image is readjusted, and the face image and the contact lens image can be synthesized for each pixel by aligning the center of the contact lens image with the center of the pupil region of the face image. Since a degree of transparency is already granted to the pixels of the contact lens image, a naturally synthesized image can be constructed.

Here, the shape of an eye (particularly, the shape of a pupil) of a photographed face image varies depending on situations at the time of photographing even for the same user. An image of a pupil close to a circular shape may be photographed at a specific time point, and an image of a pupil close to an oval shape may be photographed at another specific time point. For natural image configuration, the control unit 117 needs to consider the shape of a photographed eye and synthesize the contact lens image with only the pupil region recognized along the border line.

To this end, the control unit 117 calculates a circle and a radius using specific points among the determined points of the eye region of the face image and calculates another circle and another radius using other points (step S309). For example, the specific points of the former are three points on the border line where the upper eyelid meets the pupil, and the specific points of the latter are three points on the border line where the lower eyelid meets the pupil. Hereinafter, a circle configured of the specific points of the former is referred to as C1, and a circle configured of the specific points of the latter is also referred to as C2.

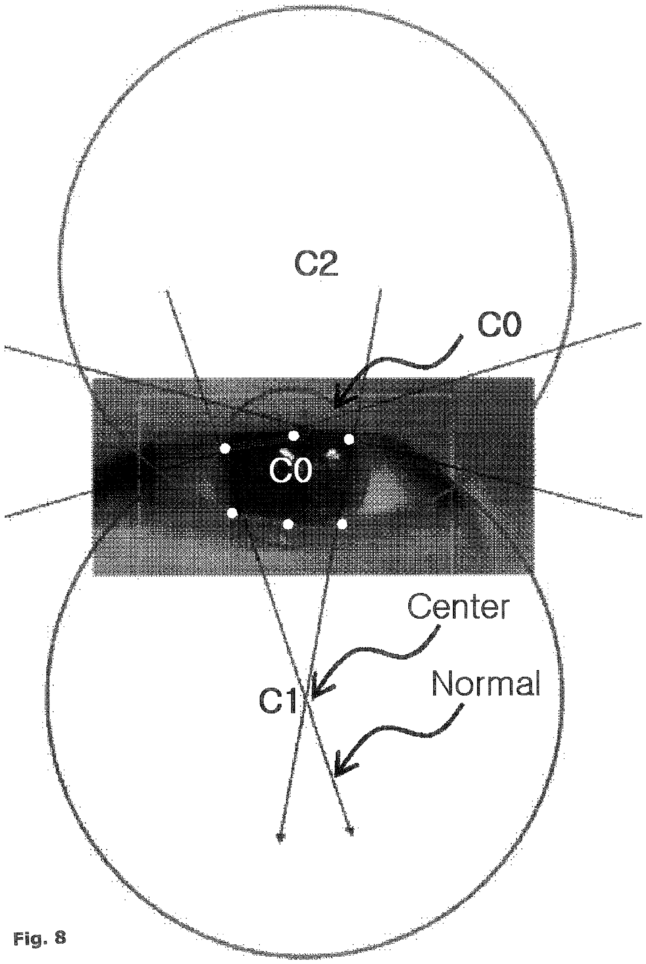

FIG. 8 is a view showing circles determined in the step of synthesizing a contact lens image and a face image, and as is understood from FIG. 8, centers and radii of C1 and C2 can be calculated using normals of the three points. The example of FIG. 8 is accomplished for the eye region of the face image, and as is understood from FIG. 8, C0, which is a circle corresponding to the pupil region, is also displayed.

The control unit 117 identifies a region in which a pupil is hidden by adjacent skin by using the circles of C1 and C2 (furthermore, CO) (step S311). The identified region is used to grant an additional degree of transparency to the circle of the contact lens region of the contact lens image.

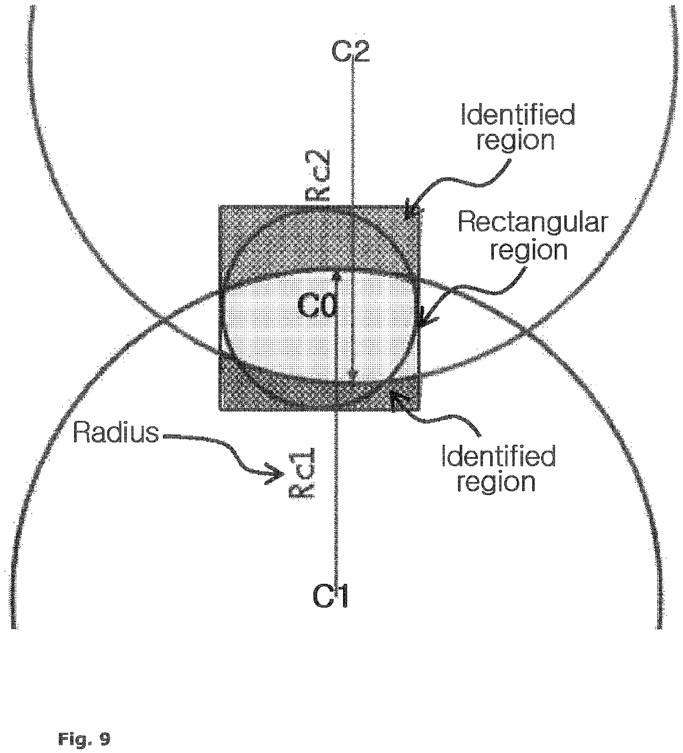

FIG. 9 is a view showing an example of identifying a region for granting an additional degree of transparency using the determined circles.

As is understood from FIG. 9, the control unit 117 identifies a region excluding the intersection of C1 and C2 from the rectangular region of the contact lens image of an adjusted (reduced) size or the rectangular region of a corresponding pupil. The identified region is generally configured of two regions. One of the regions shows a portion in which the pupil is hidden by the upper eyelid, and the other region shows a portion in which the pupil is hidden by the lower eyelid.

Describing in further detail, the control unit 117 compares each of the coordinate points of the X (horizontal) and Y (vertical) axes configuring the circle of C1 with a Y coordinate having the same X coordinate of each pixel of the rectangular region, and if the Y coordinate of a pixel of the rectangular region is larger than a corresponding Y coordinate of C1, the control unit 117 identifies the pixel as a region to be granted with a degree of transparency to make the corresponding pixel transparent. The control unit 117 may determine pixels having a larger Y coordinate in the rectangular region as pixels to be processed transparently by simply comparing Y coordinates configuring C1 with corresponding Y coordinates of the rectangular region at the same X coordinate. The coordinate points configuring the circle of C1 may be calculated using the center point and the radius of C1.

In the same manner, the control unit 117 compares each of the coordinate points of the X (horizontal) and Y (vertical) axes configuring the circle of C2 with a Y coordinate having the same X coordinate of each pixel of the rectangular region, and if the Y coordinate of a pixel of the rectangular region is smaller than a corresponding Y coordinate of C2, the control unit 117 identifies the pixel as a region to be granted with a degree of transparency to make the corresponding pixel transparent. The control unit 117 may determine pixels having a smaller Y coordinate in the rectangular region as pixels to be processed transparently by simply comparing Y coordinates configuring C2 with corresponding Y coordinates of the rectangular region at the same X coordinate. The coordinate points configuring the circle of C2 may be calculated using the center point and the radius of C2.

Identification of the regions may be accomplished by further utilizing C0. For example, it is possible that only the pixels inside C0 are compared with the coordinate points configuring C1 and C2 and a region to be processed transparently inside C0 may be identified according to the comparison. The comparison and determination method is the same as the method using C1, C2 and the rectangular region described above.

After identifying the regions, the control unit 117 grants an additional degree of transparency to the pixels of the regions of the contact lens image corresponding to the region(s) identified using C1, C2 and furthermore C0 (step S313). The degree of transparency herein is set, for example, to a value that does not show corresponding pixels of the contact lens image (i.e., set to be transparent) and granted, for example, at a degree of transparency of 100%.

Grant of the degree of transparency is accomplished for the contact lens image reduced at step S307, and a degree (value) of transparency is granted to the pixels corresponding to the identified regions to make the pixels transparent. The identified region is a region identified inside C0 or a region identified inside the rectangular region including C0.

Through the grant of an additional degree of transparency, the control unit 117 configures not to show the pixels of the contact lens image corresponding to the portions of the pupil hidden by adjacent skin, when the contact lens image is synthesized with the eye region of the face image.

After granting the additional degree of transparency, the control unit 117 synthesizes the contact lens image, to which a degree of transparency is granted, with the face image according to the granted degree of transparency (step S315). Specifically, the control unit 117 aligns the center of the pupil of the face image with the center of the circle of the contact lens image. And then the control unit 117 overlaps each pixel with a corresponding pixel according to the value of transparency granted. Through these processes, the control unit 117 synthesizes the contact lens image adjusted to the size of the pupil and granted with a degree of transparency according to the shape of the pupil at the pupil of the eye region identified from the face image.

If the degree of transparency granted to a specific pixel of the contact lens is 0% (opaque), a pixel of the contact lens image is displayed on the synthesized image. If the degree of transparency granted to a specific pixel of the contact lens 111-5 is 100% (transparent), a corresponding pixel of the face image is displayed on the synthesized image. If the degree of transparency granted to a specific pixel of the contact lens 111-5 is 30%, the color value of a pixel corresponding to the face image is added with the color value of the specific pixel with weighting values of 70% and 30%, and weight added color value is displayed on the synthesized image for the pixel.

Then, the control unit 117 terminates the synthesis process (step S350) and outputs the synthesized image through the display unit 113 (step S4).

Through the flow as described above, natural and variable images of wearing contact lenses can be provided in consideration of variable shapes of the eyes.

### INDUSTRIAL APPLICABILITY

Since those skilled in the art may make various substitutions, modifications and changes without departing from the spirits of the present invention, the present invention described above is not limited by the aforementioned embodiments and accompanying drawings.

## Claims

1. A contact lens virtual fitting method comprising the steps of:
capturing an image of a contact lens mounted on a contact lens holder through a second optical lens in a case forming a darkroom;
identifying a contact lens region from the captured image of the contact lens;
granting a degree of transparency to corresponding pixels of the contact lens region on the basis of a color of the contact lens holder or a color of a contact lens case;
synthesizing the contact lens image created through the second optical lens with a pupil of an identified eye region according to the degree of transparency granted to the contact lens image; and
displaying the synthesized image.

2. The method according to claim 1, further comprising, before the synthesis step, the steps of:
capturing a face image through a first optical lens; and
identifying an eye region from the captured face image, wherein
the step of capturing an image of a contact lens is accomplished while light is output from a plurality of LED illuminations provided in the darkroom and the light is diffused through a diffusion plate provided in the darkroom so that uniform illuminance may be provided in the darkroom.

3. The method according to claim 1, wherein the step of identifying a contact lens region includes the steps of:
identifying one or more contours from the captured image;
identifying circles according to a deviation of points on each of the one or more contours;
determining a largest circle among the identified circles as a circle corresponding to a shape of the contact lens; and
creating a contact lens image including the determined circle, wherein
the step of granting a degree of transparency includes the steps of
granting a degree of transparency according to colors of pixels in the circle determined to correspond to the contact lens, and
granting a degree of transparency larger than a predetermined threshold value to pixels outside the circle.

4. The method according to claim 2, wherein the step of identifying an eye region includes the step of determining a plurality of points positioned on a border line between the pupil and skin adjacent to the pupil.

5. The method according to claim 4, wherein the synthesis step includes the steps of:
determining a circle corresponding to the pupil using the plurality of points;
reducing the created contact lens image using a size of the circle determined by the plurality of points; and
further granting a degree of transparency to pixels of a region identified in the reduced contact lens image using a first circle determined by first points and a second circle determined by second points among the plurality of points.

6. The method according to claim 5, wherein the pixels of the identified region are set to be transparent, and the synthesis step includes the step of, after the step of granting a degree of transparency of the identified region, aligning a center of a circle of the reduced contact lens with a center corresponding to the pupil and synthesizing by overlapping each pixels after aligning.

7. A computer program for executing each of the steps of the contact lens virtual fitting method according to claim 1.

8. A contact lens virtual fitting device comprising:
a first camera unit including a first optical lens to capture a face image;
a second camera unit including a second optical lens and a contact lens holder and configured in a case forming a darkroom to capture an image of a contact lens mounted on the contact lens holder through the second optical lens;
a control unit for identifying a contact lens region from the captured image of the contact lens, granting a degree of transparency to corresponding pixels of the contact lens region on the basis of a color of the contact lens holder or a color of a contact lens case, identifying an eye region from the captured face image, and synthesizing the contact lens image created through the second optical lens with a pupil of the identified eye region according to the degree of transparency granted to the contact lens image; and
a display unit for displaying the synthesized image.

9. The device according to claim 8, wherein the second camera unit further includes a plurality of LED illuminations for outputting light and a diffusion plate for diffusing the light, and the control unit captures an image of the contact lens through the second optical lens in an illuminance environment of light using the plurality of LED illuminations and the diffusion plate.

10. The device according to claim 8, wherein for identification of the contact lens region, the control unit identifies one or more contours from the captured contact lens image, identifies circles according to a deviation of points on each of the one or more contours, determines a largest circle among the identified circles as a circle corresponding to a shape of the contact lens, and creates a contact lens image including the determined circle, and for grant of the degree of transparent, the control unit grants a degree of transparency according to colors of pixels in the circle determined to correspond to the contact lens, and grants a degree of transparency larger than a predetermined threshold value to pixels outside the circle.

11. The device according to claim 8, wherein for identification of the eye region, the control unit determines a plurality of points positioned on a border line between the pupil and skin adjacent to the pupil, and for image synthesis, the control unit determines a circle corresponding to the pupil using the plurality of points, reduces the created contact lens image using a size of the circle determined by the plurality of points, and grants a degree of transparency to pixels of a region identified in the reduced contact lens image using a first circle determined by first points and a second circle determined by second points among the plurality of points.

12. The device according to claim 8, further comprising:
a storage unit for storing the contact lens image and a contact lens identifier corresponding to the contact lens image; and
an input unit for receiving the contact lens identifier, wherein
the control unit searches for a contact lens image stored in the storage unit using the contact lens identifier received through the input unit and synthesizes a contact lens region of the contact lens image searched from the storage unit for image synthesis with the pupil of the eye region.
